# DEMANDE DE BREVET EUROPEEN

(11) **EP 4 331 985 A1**
(43) Date de publication de la demande: **06.03.2024**
(21) Numéro de dépôt: 23192069.5
(22) Date de dépôt: 18.08.2023
(51) Int. Cl.: B64D 1/16, A62C 3/02

(54) **SYSTÈME DE STOCKAGE ET DE LARGAGE DE FLUIDE MODULAIRE ET AÉRONEF POURVU D'UN TEL SYSTÈME**

(30) Priorité: 30.08.2022 FR 2208679
(71) Demandeur: Airbus (S.A.S.), 31700 Blagnac (FR)
(72) Inventeur: BURGUNDER, Samuel, TOULOUSE (FR); THIERS, Jean-Loup, TOULOUSE (FR)
(74) Mandataire: Airbus-OPS SAS

(57) **Abrégé**

L'invention vise à proposer un système de stockage et de largage d'eau modulaire susceptible d'être facilement introduit et retiré d'un aéronef hôte de lutte contre le feu. Pour ce faire le système de stockage et de largage d'eau pour aéronef hôte comprend un réservoir (10) de fluide et au moins un tube (12). Le réservoir (10) est connecté audit ou à l'ensemble desdits tubes (12) qui s'étend(ent) longitudinalement depuis le réservoir (10) de manière qu'une fois installé dans l'aéronef hôte, le ou les tubes (12) conduisent le fluide jusqu'à l'extrémité longitudinalement d'une porte arrière de l'aéronef en position ouverte. La présente invention concerne également l'aéronef hôte équipé d'un tel système.

## Description

La présente invention concerne un système de stockage et de largage de fluide et plus particulièrement d'eau ou de produits tels qu'un retardant intégré à un aéronef hôte permettant de le convertir en aéronef bombardier d'eau utilisé pour la lutte contre les incendies notamment de forêts. L'invention s'applique à tous les types d'aéronefs susceptibles de recevoir un tel système et notamment aux aéronefs civils et militaires.

Pour permettre de lutter plus efficacement contre les incendies de forêt, un renfort en aéronef bombardier d'eau serait utile. Il est donc envisagé de convertir temporairement des aéronefs non utilisés au moment de l'incendie ou dont l'utilisation peut être temporisée ou annulée, en aéronef bombardier d'eau. De tels aéronefs sont appelés aéronefs hôtes. Dès la fin de l'incendie, l'aéronef peut à nouveau remplir sa mission première. Ainsi, par exemple, des avions militaires comme l'A400M (marque déposée) sont particulièrement appropriés en temps de paix. Ce type d'avion de type cargo présente un volume intérieur susceptible d'embarquer un chargement comprenant un réservoir d'eau et un dispositif permettant de larguer l'eau à l'extérieur de l'avion. Lorsque le feu est éteint, il suffit de décharger l'aéronef pour l'utiliser comme avion militaire.

La présente invention vise à proposer un système de stockage et de largage d'eau modulaire susceptible d'être facilement introduit et retiré d'un avion hôte et permettant de larguer l'eau à l'extérieur de l'aéronef à un débit suffisant.

A cet effet, la présente invention concerne un système de stockage et de largage de fluide pour aéronef hôte comprenant un réservoir de fluide et au moins un tube, caractérisé en ce que le réservoir est connecté audit ou à l'ensemble desdits tubes qui s'étend(ent) longitudinalement depuis le réservoir de manière qu'une fois installé dans un aéronef hôte, le ou les tubes conduisent le fluide jusqu'à l'extrémité longitudinalement d'une porte arrière de l'aéronef en position ouverte.

De cette manière, le système est simple et facile à introduire et désinstaller d'un aéronef hôte.

L'invention prévoit au moins l'une des caractéristiques optionnelles suivantes, prises isolément ou en combinaison.

Le système de stockage et de largage de fluide comprend un support de transport et de fixation qui avec le réservoir et le ou les tubes forment un ensemble d'un seul tenant.

Le support de transport et de fixation comporte un châssis comprenant des poutres permettant de transporter et fixer le système dans l'aéronef.

Le châssis comprend des poutres longitudinales et/ou transversales inférieures et les poutres longitudinales et/ou transversales comprennent des moyens de fixation adaptés pour la fixation à l'aéronef.

Le support de transport et de fixation comprend une palette sur laquelle est disposé au moins le réservoir permettant de transporter et fixer le système dans l'aéronef.

Le support présente une longueur déterminée permettant de répartir la charge du réservoir sur ladite longueur.

Le système comprend deux tubes.

Les tubes sont parallèles les uns aux autres et les axes des tubes sont tous compris dans un même plan.

Des tuyaux s'étendent parallèlement aux tubes et une des extrémités de chaque tuyau est connectée au réservoir et l'autre extrémité s'étend dans une direction différente de la direction longitudinale du ou des tubes.

L'autre extrémité de chaque tuyau s'étend dans une direction perpendiculaire à la direction longitudinale du ou des tubes.

Le réservoir est muni d'une ouverture au niveau de la paroi supérieure du réservoir et d'un flotteur dans le réservoir destiné à fermer l'ouverture lorsque le réservoir est rempli.

La paroi du réservoir présente une cavité vers l'intérieur du réservoir allant en se rétrécissant jusqu'à l'ouverture.

L'extrémité libre de la cavité est courbée et vient s'insérer dans un rétrécissement d'un flotteur, le mouvement dans une direction Z du flotteur étant alors bloqué par un épaulement formé par un élargissement supérieur et un épaulement formé par un élargissement inférieur.

Le flotteur est lié à une paroi du réservoir par un bras permettant de guider le mouvement du flotteur et lui permettre de s'éloigner et de se rapprocher de l'ouverture et lorsqu'appliqué contre l'ouverture de la fermer complètement.

Un ressort de rappel lie la paroi du réservoir présentant l'ouverture au bras.

La présente invention concerne également l'aéronef hôte comprenant une porte arrière et une zone intérieure dans laquelle est introduit un système présentant une ou plusieurs des caractéristiques susmentionnées dont les tubes s'étendent jusqu'à l'extrémité longitudinalement de ladite porte arrière de l'aéronef en position ouverte.

L'invention prévoit au moins l'une des caractéristiques optionnelles suivantes, prises isolément ou en combinaison.

Le réservoir est installé dans une position acceptable par rapport au centre de gravité de l'aéronef.

Les tuyaux s'étendent sur une distance permettant à leur extrémité de venir à hauteur latéralement du bord latéral de la porte arrière de l'aéronef ou en retrait vers l'intérieur de celle-ci.

D'autres buts, caractéristiques et avantages ressortiront de la description de l'invention qui va suivre, description donnée à titre d'exemple uniquement non limitatif, en référence aux dessins ci-annexés dans lesquels :
[Fig. 1] est une vue latérale d'un aéronef hôte selon la présente invention ;
[Fig. 2] est une vue en perspective d'un système de stockage et de largage de fluide selon la présente invention ;
[Fig. 3] est une vue latérale d'un aéronef hôte équipé d'un système de stockage et de largage de fluide selon la présente invention dans lequel l'intérieur de l'aéronef est découvert de manière schématisée en plan ;
[Fig. 4] est une vue en perspective de la zone arrière d'un aéronef hôte en opération équipé d'un système de stockage et de largage de fluide selon la présente invention ;
[Fig. 5] est une vue en perspective d'un certain angle de vue de dessous d'un dispositif de largage de fluide selon la présente invention ;

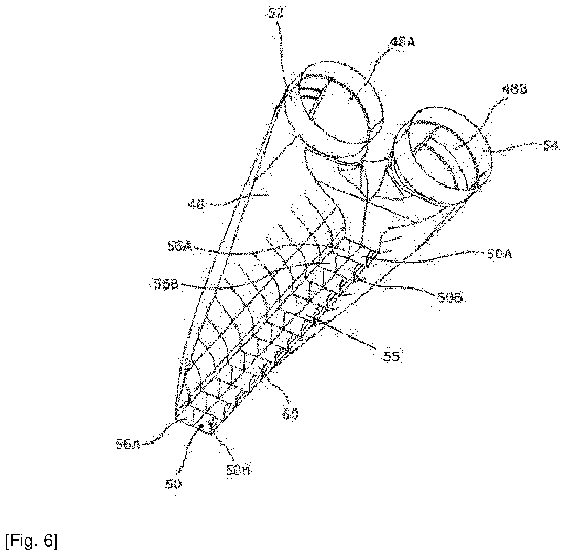

[Fig. 6] est une vue en perspective d'un certain angle de vue de dessus d'un dispositif de largage de fluide selon la présente invention ;
[Fig. 7] une vue en perspective d'un certain angle de vue latéral de la zone avant d'un aéronef équipé d'un système de stockage et de largage de fluide selon la présente invention dont l'intérieur est découvert pour mettre en évidence de manière schématisée un dispositif de contrôle dudit système ;
[Fig. 8] est une vue en perspective du dispositif de contrôle proprement dit selon la présente invention ;
[Fig. 9] une vue en en plan du panneau de contrôle du dispositif de contrôle selon la présente invention ;
[Fig. 10] une vue partielle schématique de côté en coupe du réservoir, l'avion étant en vol dans une position inclinée ;
[Fig. 11] une vue partielle schématique de côté en coupe du réservoir selon une autre forme de réalisation que celle de la figure 10, l'avion étant en vol dans une position inclinée.

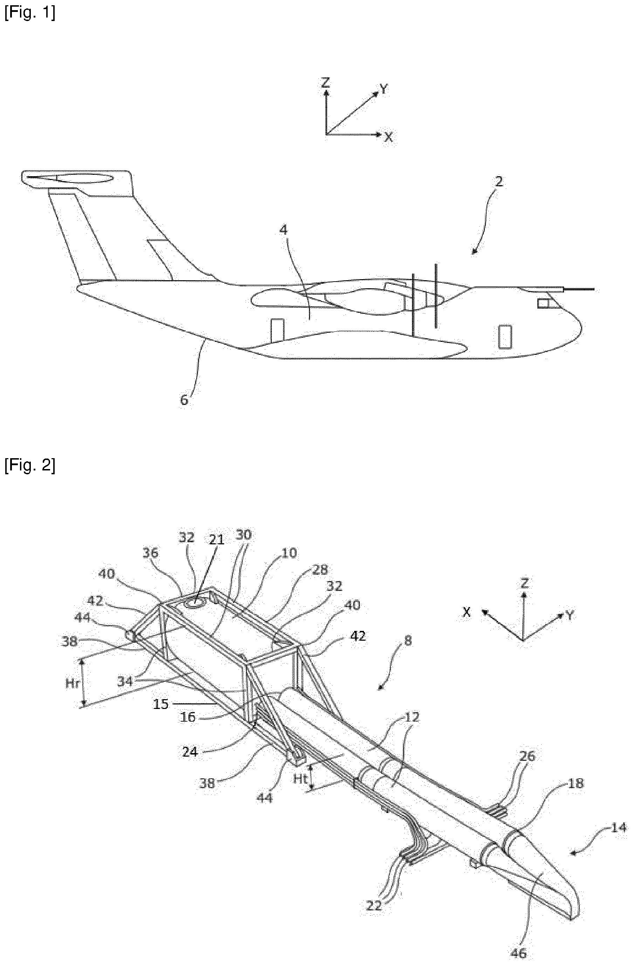

La description qui suit se réfère à un repère orthonormé X, Y, Z (visible sur les figures 1 et 2) dans lequel les directions horizontales X,Y et verticale Z sont définies en référence à un aéronef posé sur un sol horizontal. Les trois directions X, Y, Z sont orthogonales entre elles. Le fuselage de l'aéronef s'étend le long d'une direction longitudinale X. La direction Y correspond à la direction orientée transversalement et horizontalement par rapport à la direction longitudinale X. La direction Z correspond à la direction verticale ou hauteur. Qualifier de longitudinal respectivement transversal, vertical signifie parallèle à la direction longitudinale, respectivement transversale, verticale.

La figure 1 représente un aéronef 2 militaire de type A400M (marque déposée) destiné à être converti temporairement en aéronef bombardier d'eau. L'aéronef 2 comprend une zone 4 offrant un espace libre intérieur utile. Il dispose également d'une porte 6 arrière susceptible de s'ouvrir en vol. La figure 1 représente la porte 6 en position fermée. L'A400M est pris à titre illustratif mais d'autres aéronefs présentant des caractéristiques similaires à savoir une zone 4 présentant un volume intérieur suffisant pour recevoir un système 8 comme décrit ci-après et une porte 6 arrière permettant la communication de la zone 4 avec l'extérieur de l'aéronef pourrait convenir comme aéronef 2 hôte.

Selon la présente invention, le système 8 de stockage et de largage de fluide comprend un réservoir 10 de fluide disposé longitudinalement et dans l'exemple illustré d'eau, de retardant ou tout autre fluide utilisé pour la lutte contre le feu et au moins un tube 12 s'étendant longitudinalement depuis le réservoir auquel il est connecté. Disposer ou s'étendre longitudinalement signifie que la direction de la plus grande dimension est parallèle à la direction longitudinale à savoir la direction X. Le fluide utilisé est en général de l'eau mais d'autres types de fluide tels qu'un retardant pourraient être utilisés suivant le feu à éteindre voire de l'eau combiné à tout type de produits. Dans la forme de réalisation illustrée, la hauteur Hr du réservoir, à savoir la dimension du réservoir la plus grande prise dans la direction Z verticale, est supérieure à celle Ht (dimension la plus grande prise dans la direction Z verticale) du ou des tubes 12. La hauteur Ht correspond au diamètre de tubes cylindriques de section circulaire comme ceux représentés sur les figures. Selon la forme de réalisation illustrée, la hauteur Hr est au moins deux fois supérieure à la hauteur Ht. Par ailleurs, la largeur Lr du réservoir, à savoir la dimension la plus grande prise dans la direction transversale Y, est supérieure à la largeur la plus grande du tube 12 ou dans le cas de plusieurs tubes, à la somme des largeurs les plus grandes des tubes 12 : la largeur d'un tube correspond à son diamètre pour des tubes cylindriques de section circulaire comme ceux représentés sur les figures. Du fait d'avoir une section transversale de tube de dimension bien plus faible que la section transversale du réservoir, la vitesse du fluide s'écoulant dans le ou les tubes 12 depuis le réservoir est d'autant plus importante. Ces rapports de dimension déterminent la vitesse d'écoulement et sont donc choisis pour avoir une vitesse d'écoulement suffisante pour un largage d'eau hors de l'aéronef efficace. Toutes autres proportions dans les dimensions est possible. Dans le cas de plusieurs tubes 12, ceux-ci peuvent être disposés parallèlement les uns aux autres. Dans le cas de tubes cylindriques de section circulaire, l'ensemble des axes des tubes sont compris dans un même plan. Dans la forme de réalisation illustrée, deux tubes 12 sont prévus mais comme vu précédemment tout autre nombre de tubes est envisageable. Les deux tubes 12 sont de forme cylindrique de section circulaire. Ils sont parallèles et leurs axes sont compris dans un même plan parallèle au plan XY. Les tubes s'étendent dans la direction longitudinale du réservoir à savoir dans la direction de sa longueur pour un réservoir parallélépipédique de base rectangulaire et section carré. Le réservoir s'étendant lui-même dans une direction longitudinale. Toute autre forme de réalisation est possible à savoir des tubes de dimensions différentes, positionnés dans des plans différents ... Le ou les tubes s'étendent de manière qu'une fois le système 8 installé dans l'aéronef, le ou les tubes 12 conduisent le fluide jusqu'à l'extrémité 20 longitudinalement de la porte arrière 6 de l'aéronef en position ouverte.

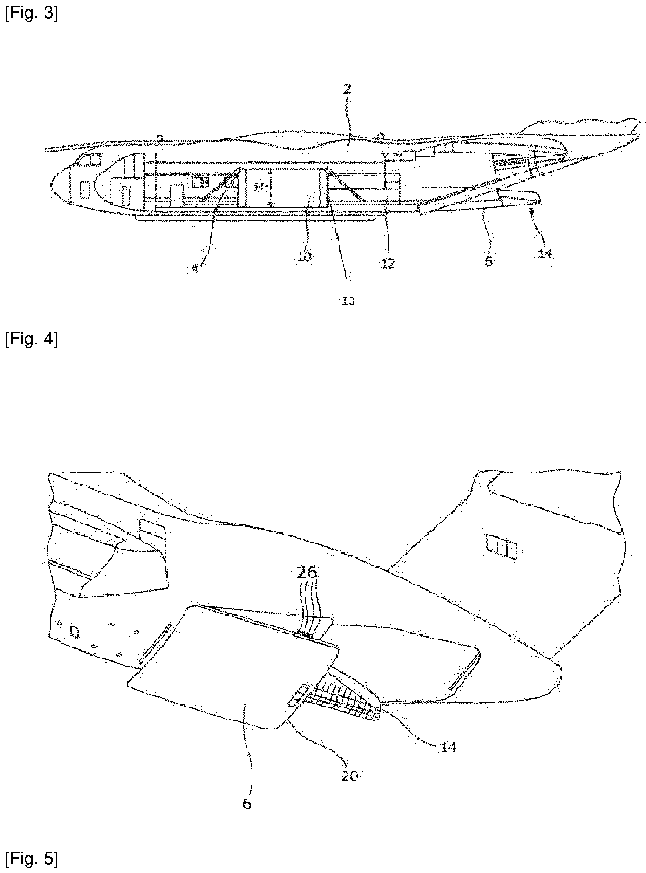

Dans la forme illustrée, les tubes 12 s'étendent depuis le réservoir 10 jusqu'à un dispositif 14 de largage d'eau : leur longueur est choisie pour que l'une des extrémités 16 des tubes soit connectée avec le réservoir 10 et l'autre extrémité 18 avec le dispositif 14. Dans la forme de réalisation, l'extrémité 18 des tubes, une fois le système 8 en position de largage, se trouve au droit de l'extrémité 20 (représentée sur la figure 4) libre de la porte 6 arrière. De cette manière, le dispositif 14 de largage est entièrement à l'extérieur de l'aéronef en porte à faux. La longueur des tubes 12 permet également de positionner le réservoir 10 à une distance acceptable du centre de gravité de l'aéronef pour ne pas gêner son équilibre lorsqu'il est rempli et pendant le largage. La distance acceptable est de manière connue déterminée par un diagramme de masse et de centrage propre à chaque aéronef. Selon une forme de réalisation, le centre de gravité du réservoir seul rempli d'eau se trouve à une distance acceptable du centre de gravité de l'aéronef. Chaque tube 12 est pourvu d'une vanne 13 au niveau de sa connexion avec le réservoir. Chaque vanne 13 est de type connue par exemple de type papillon ou à obturateur conique et ne sera pas plus décrit: elle permet d'ouvrir et fermer la communication entre le réservoir et chaque tube. Comme il sera vu plus loin, une ou plusieurs vannes peuvent être positionnées également au niveau du dispositif 14 de largage pour adapter le débit d'eau. Suivant la forme de réalisation, le système 8 comprend des vannes 13 au niveau liaison réservoir-tube et/ou liaison dispositif 14-air extérieur à l'aéronef. De munir les tubes de vannes 13 au niveau de leur connexion avec le réservoir permet à l'aéronef de voler avec le réservoir 10 rempli de fluide et les tubes 12 vides. Ainsi en positionnant le réservoir à une distance acceptable du centre de gravité de l'aéronef, l'équilibre de l'aéronef est maintenu. Cependant, il est possible de déplacer le réservoir dans une position plus lointaine du centre de gravité par exemple pour éviter la zone de projection des pales moteur. Dans ce cas, le fait de munir le dispositif de largage de vannes permet de remplir les tubes (remplis en vol) et de déplacer le centre de gravité du système complet (par rapport à celui d'un système avec les tubes vides) afin qu'il soit à une distance acceptable de celui de l'aéronef.

Au moins deux tuyaux 22 s'étendent dans la direction longitudinale X entre le réservoir 10 et la porte 6 arrière le long du ou desdits tubes 12. Dans le cas de tuyaux 22 et tubes 12 cylindriques de section circulaire, les tuyaux 22 sont de diamètre inférieur à celui des tubes 12. L'une des extrémités 24 des tuyaux est connectée au réservoir 10 et l'autre extrémité 26 se trouve au niveau de la porte 6 arrière. Les tuyaux 22 au niveau de l'extrémité 26 suivent une direction différente de la direction longitudinale et dans la forme illustrée une direction transversale. En effet, les tuyaux 22 présentent une forme permettant à leur extrémité 26 de venir à hauteur transversalement du bord latéral de la porte arrière ou en retrait par rapport à celui-ci vers l'intérieur de la porte de manière à pouvoir fermer la porte 6 au décollage, à l'atterrissage et dans certaines phases de vol. Les tuyaux 22 permettent d'alimenter le réservoir 10 depuis le sol. Chaque extrémité 26 est connectée à un ou plusieurs engins au sol par exemple des camions de pompier ce qui permet de remplir le réservoir en eau depuis le sol. Selon une forme de réalisation possible, l'extrémité 26 est conçue de manière à recevoir les raccords types de tuyaux souples des camions de pompier. La pluralité de tuyaux permet d'adapter le temps de remplissage. Le fait d'être accessible des deux côtés de l'aéronef permet à un engin au sol de stationner d'un côté ou de l'autre de l'aéronef sachant qu'il est aussi possible d'avoir un engin de chaque côté pour accélérer le remplissage. Dans la forme de réalisation illustrée, trois tuyaux 22 sont prévus le long de chacun des deux tubes 12, à savoir en tout six tuyaux. Les deux tubes 12 dits extrémaux dans le cas de plus de deux tubes correspondent aux tubes se trouvant au plus près transversalement des parois de l'aéronef. Les tuyaux 22 sont disposés au niveau latéral de chacun des tubes 12 extrémaux du côté opposé au tube adjacent. Les tuyaux 22 sont disposés l'un au-dessus de l'autre selon l'axe vertical Z. Les tuyaux 22 s'éloignent peu à peu transversalement des tubes 12. Dans la forme de réalisation illustrée, les tuyaux s'éloignent jusqu'à se trouver dans une direction transversale Y au niveau du bord de la porte arrière transversalement. Dans la forme de réalisation illustrée sur la figure 4, l'extrémité des tuyaux 22 se trouve dans la deuxième moitié longitudinalement de la porte 6 arrière la plus proche de l'extrémité 20.

Le système 8 est pourvu d'un moyen permettant de prévenir les personnes remplissant le réservoir du fait qu'il soit plein. Plusieurs formes de réalisation sont possibles.

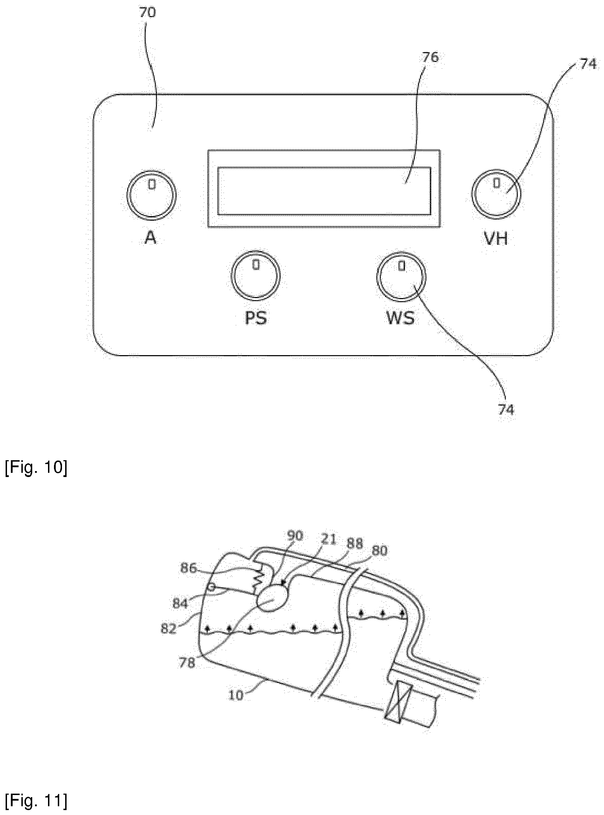

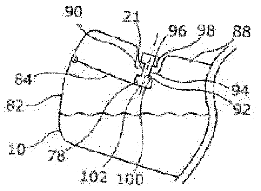

Selon la forme de réalisation représentée sur les figures 2 et 10, le réservoir 10 comprend une ouverture 21 et un flotteur 78 dans le réservoir. En remplissant le réservoir, le flotteur 78 monte jusqu'à venir fermer l'ouverture 21. Un conduit 80 connecte le haut du réservoir à l'un des tubes 12. Lorsque le réservoir et plus précisément l'ouverture 21 est fermée par le flotteur, et que l'opérateur continue à remplir le réservoir, l'eau passe alors par le conduit 80 et coule dans le conduit 80 puis dans le tube 12 concerné. Lorsque la personne en charge de remplir le réservoir voit de l'eau couler par le tube, elle est avertie que le réservoir est plein. Cela constitue ainsi un mécanisme d'avertissement que le réservoir est plein mais d'autres mécanismes sont possibles. Ainsi par exemple, le flotteur pourrait être pourvu d'un drapeau qui traverse l'ouverture 21 et dépasse de la paroi du réservoir vers l'extérieur lorsque le réservoir est plein.

Selon une autre forme de réalisation non représentée, un conduit connecte le réservoir par une face latérale de celui-ci de préférence celle au niveau de laquelle les tubes sont reliées et un des tubes 12. À l'entrée du conduit au niveau du réservoir se trouve un clapet fermant l'ouverture et soutenu par un ressort de soupape dont la force est supérieure à celle exercée par l'eau. Lorsque le réservoir est plein, le flotteur de la même façon que précédemment ferme le réservoir. La pression monte et dépasse le seuil maximal fixé par la soupape : le clapet ne peut plus être maintenu fermé. Le clapet s'ouvre et évacue l'eau dans le tube 12. La personne en charge du remplissage du réservoir en voyant l'eau couler par le tube 12 sait que le réservoir est rempli.

Le flotteur 78 est relié à une paroi 82 interne du réservoir. La paroi 82 est la paroi du réservoir se trouvant dans un plan YZ la plus proche de l'ouverture 21. Le flotteur 78 est relié à la paroi 82 par un bras 84 permettant de guider le mouvement du flotteur. La liaison entre le bras 84 et la paroi 82 permet une rotation dans un plan XZ autorisant le flotteur 78 à s'éloigner et se rapprocher de l'ouverture 21 et lorsqu'en contact avec le réservoir à fermer ladite ouverture 21. Le bras 84 permet ainsi au flotteur 78 lorsque repoussé dans la direction Z par l'eau vers l'ouverture 21 de fermer automatiquement l'ouverture 21. Tout autre moyen permettant au flotteur de venir s'appliquer contre l'ouverture lorsque repoussé par l'eau est envisageable.

Selon la forme représentée sur la figure 10, un ressort 86 de rappel relie la paroi interne 88 du réservoir pourvue de l'ouverture 21 au bras 84. Le ressort 86 de rappel a pour fonction une fois la quantité d'eau souhaitée expulsée de l'aéronef de rappeler le bras 84 dans sa position première à savoir contre l'ouverture 21. De ce fait, l'ouverture 21 étant fermée, si le réservoir n'a été vidé que partiellement et que l'avion se retrouve dans des turbulences, l'eau ne peut pas être projetée à l'extérieur du réservoir par l'ouverture 21 qui est fermée à l'aide du flotteur 78 maintenue contre l'ouverture par le ressort 86 de rappel.

La paroi 88 peut présenter une forme particulière au niveau de l'ouverture 21. Le flotteur 78 également peut présenter tout type de forme. Selon les formes de réalisation illustrées sur les figures 10 et 11, la paroi 88 au niveau de l'ouverture 21 se prolonge vers l'intérieur du réservoir de manière à former une cavité 90 allant en se rétrécissant jusqu'à former l'ouverture 21 au plus bas dans la direction Z (lorsque l'aéronef est au sol et que la paroi 82 est parallèle à l'axe Z).

Dans la forme de réalisation de la figure 11, la gestion du trop-plein est réalisée différemment et non représentée. Il est possible de prévoir une valve qui s'ouvre à partir d'une certaine pression par exemple. Le flotteur 78 présente une forme présentant un rétrécissement 92 au niveau central dans la direction Z (lorsque l'aéronef est au sol et que la paroi 82 est parallèle à l'axe Z). Le bord 94 de la cavité au niveau de l'ouverture 21 est courbe et orientée vers l'intérieur pour venir s'insérer au niveau du rétrécissement 92 du flotteur 78. Dans ce cas, aucun ressort de rappel n'est nécessaire puisque le flotteur est retenu par le bord 94 extrémal de la cavité 90, bloqué par l'épaulement 96 formé par l'élargissement 98 supérieur du flotteur ou par l'épaulement 100 formé par l'élargissement 102 inférieur de celui-ci. Le rétrécissement 92 présente une certaine longueur dans la direction Z pour permettre au flotteur 78 de se déplacer dans la direction Z. La paroi de la cavité 90 ainsi que la forme particulière du flotteur font écran à toute projection d'eau qui pourrait se faire vers l'extérieur du réservoir par l'ouverture 21.

Le système 8 comprend un support 15 de transport et de fixation qui avec le réservoir 10 et le ou les tubes 12 forment un ensemble d'un seul tenant. La description qui suit présente deux formes de réalisation du support 15.

Selon une première forme de réalisation, le support 15 comprend un châssis 28 comportant des poutres permettant de transporter le réservoir et le ou les tubes et de les fixer dans l'aéronef et par exemple au plancher 9 de celui-ci. Le châssis 28, le réservoir 10 et le ou les tubes 12 forment un ensemble d'un seul tenant susceptible d'être chargé et déchargé de l'aéronef. Les poutres comportent des moyens de fixation de type connu à l'aéronef et par exemple au plancher 9 de l'aéronef. Les figures illustrent une forme possible de châssis mais toute autre forme permettant de former un tout d'un seul tenant avec le réservoir et le ou les tubes 12 pour transporter le système 8 d'un seul bloc dans l'aéronef ou de décharger de celui-ci ainsi que pour la fixation dans l'aéronef est possible. Dans la forme illustrée sur les figures 2 et 3, le châssis 28 comprend quatre poutres 30 longitudinales, quatre poutres 32 transversales et quatre poutres 34 verticales formant une armature 36 parallélépipédique de section rectangulaire. Le réservoir 10 est en contact avec l'ensemble des poutres mais ne déborde pas à l'extérieur de l'armature 36 formée. Les deux poutres 30 longitudinales inférieures se prolongent longitudinalement de part et d'autre de l'armature 36 par quatre poutres de prolongement 38 longitudinales inférieures. Les extrémités 40 supérieures de chaque poutre 34 verticale sont liées par une autre poutre 42 inclinée aux extrémités 44 des poutres 38 de prolongement longitudinales inférieures. Les poutres 42 inclinées forment des supports à l'armature 36 pour renforcer sa solidité. Par ailleurs, la masse du châssis est répartie sur une certaine longueur de plancher 9 afin d'éviter de le surcharger localement et de l'endommager. Le châssis permet également le maintien en position du réservoir sur le plancher 9 de l'aéronef. Ils offrent enfin des prises pour tout type d'engin permettant de transporter et introduire le système 8 modulaire dans l'aéronef. Les poutres 42 se trouvant du côté des tubes 12 encadrent ceux-ci sur une partie de leur longueur et en particulier au niveau de la zone de connexion des tubes 12 avec le réservoir. Les poutres permettent également d'être adaptées pour recevoir des moyens de fixation du système 8 au plancher 9 de l'aéronef.

Selon une deuxième forme de réalisation non illustrée, le support 15 comporte une palette sur laquelle est disposée au moins le réservoir permettant de transporter le réservoir et le ou les tubes et de les fixer dans l'aéronef et par exemple au plancher 9 de celui-ci. La palette, le réservoir 10 et le ou les tubes 12 forment un ensemble d'un seul tenant susceptible d'être chargé et déchargé de l'aéronef. La palette comporte des moyens de fixation de type connu à l'aéronef et par exemple au plancher de l'aéronef. Il suffit alors de porter la palette à l'intérieur de l'aéronef et de la faire glisser sur le plancher 9 pour positionner le système à l'emplacement souhaité, certains planchers étant équipés de roulettes.

Que ce soit dans la forme de réalisation avec palette ou avec châssis, le système 8 est d'un seul tenant formant un ensemble modulaire susceptible d'être intégré à un aéronef hôte. Le système 8 modulaire présenté permet ainsi d'être installé de manière temporaire dans un aéronef hôte et d'éviter d'avoir à le modifier pour recevoir ce système 8. Le système 8 peut être installé et désinstallé à volonté en fonction du programme de l'aéronef hôte concerné. Par ailleurs, le support présente une longueur déterminée permettant de répartir la charge du réservoir sur ladite longueur comme vu plus haut pour l'exemple illustré du châssis. Selon une forme possible de réalisation, la longueur du support (châssis ou palette) est au moins égale à la longueur du réservoir 10.

Le dispositif 14 de largage d'eau peut présenter tout type de forme. Le dispositif de largage d'eau peut se résumer à sa plus simple expression en un prolongement des tubes 12 et être intégré au système 8. En effet il pourrait être envisagé de laisser dépasser les extrémités 18 des tubes 12 de la porte 6 arrière au-delà de l'extrémité 20 de celle-ci.

Dans la forme illustrée, le système 8 modulaire est équipé d'un dispositif 14 de largage de fluide et dans l'exemple décrit de largage d'eau. Le dispositif 14 de largage d'eau a pour but de modifier la direction de l'écoulement. D'une direction longitudinale, le dispositif 14 permet au flux d'eau de s'écouler dans une direction différente. Dans la forme de réalisation illustrée, le dispositif 14 permet de larguer l'eau dans une direction appropriée et par exemple perpendiculaire à la direction longitudinale à savoir une direction verticale Z ou proche d'une direction verticale si l'aéronef en vol ne se trouve pas en position horizontale. Par ailleurs, le dispositif 14 présente également un autre avantage qui est de répartir le largage en plusieurs flux dont l'utilisation peut être indépendamment contrôlée pour chacun des flux, à savoir autorisée ou pas. Ainsi suivant l'intensité du feu, une partie seulement des flux pourrait être utilisée ce qui permet de sauvegarder une quantité d'eau pour un autre feu, une autre localisation de foyer ou à d'autres fins.

Le dispositif de largage d'eau comprend une cuve 46 close présentant au moins une ouverture 48 pour l'entrée d'eau et au moins une ouverture 50 pour le largage de l'eau vers l'extérieur de l'aéronef. L'ouverture 48 présente une forme permettant à la cuve de s'emmancher sur le ou les tubes 12 de manière à former une connexion étanche de manière connue. Dans le cas de plusieurs tubes parallèles et dans la forme illustrée de deux tubes 12, la cuve présente deux ouvertures 48A, 48B se prolongeant sous forme de manchons 52, 54 permettant la connexion avec les tubes 12. Dans le cas présent, les manchons 52, 54 présentent une forme cylindrique de section circulaire.

Dans la forme de réalisation illustrée, la cuve 46 comprend plusieurs ouvertures 50A, 50B ... 50n indépendantes. Les ouvertures 50A, 50B ... 50n sont aboutées l'une à l'autre. Les ouvertures 50A, 50B ... 50n sont contiguës de manière à circonscrire l'ensemble dans une même plus grande ouverture 51 de forme géométrique déterminée par la forme des ouvertures 50A, 50B, ... 50n. Dans la forme illustrée sur les figures, chaque ouverture 50A, 50B ... 50n est de forme rectangulaire. Les ouvertures 50A, 50B ... 50n contiguës sont circonscrites dans une même grande ouverture rectangulaire 51 scindée en plusieurs ouvertures 50A, 50B, ... 50n. Les ouvertures 50A, 50B, ... 50n sont comprises dans un plan parallèle au XY, à savoir un plan perpendiculaire à un plan transversal YZ aux tubes. Les ouvertures 50A, 50B, ... 50n sont orientées de manière à guider les flux s'écoulant au travers vers le sol, à savoir dans une direction verticale Z. En vol, l'aéronef peut voler dans une position cabrée. La porte 6 arrière en position ouverte peut se trouver dans le prolongement du plancher 9 de l'aéronef. Ainsi le dispositif de largage 14 disposée au-delà de la porte 6 mais dans son prolongement longitudinal ne se trouve pas dans une position horizontale en vol. Le plan dans lequel les ouvertures 50A, 50B ... 50n sont disposées est choisi suivant la direction de largage d'eau souhaitée. Par ailleurs, la cuve présente une forme permettant de former des conduits 53A, 53B, ... 53n d'écoulement d'eau dont l'orifice de sortie correspond à chaque ouverture 50A, 50B ... 50n. Les conduits sont ici de forme parallélépipédique de section rectangulaire formant ensemble un bloc parallélépipédique de section rectangulaire dont l'orifice de sortie correspond à l'ouverture 51 rectangulaire. Les contours externes des conduits pourraient être arrondis à des fins aérodynamiques. L'axe de chaque conduit 53A, 53B, ... 53n correspond à l'axe de l'ouverture 50A, 50B ... 50n correspondante.

Selon une forme de réalisation, les ouvertures 50A, 50B ... 50n sont susceptibles chacune d'être obturée par une vanne 55 prenant dans la forme de réalisation illustrée la forme d'un volet respectivement 56A, 56B,... 56n. Selon une forme de réalisation de l'invention, chaque conduit 53A, 53B, ... 53n est pourvu d'un volet 56A, 56B,... 56n. Ainsi, l'ouverture et la fermeture de chaque volet 56A, 56B,... 56n peuvent être contrôlées indépendamment pour chaque volet par un dispositif 58 de contrôle décrit plus loin. Les volets 56 permettent de régler le débit de fluide largué.

Dans la forme de réalisation illustrée, la cuve 46 présente une forme d'entonnoir à savoir dont les dimensions dans un plan parallèle au plan XY diminuent en allant verticalement vers le bas, la dimension la plus grande se trouvant à hauteur des tubes de manière à guider l'eau vers la ou les ouvertures 50. La partie la plus basse de la cuve dans la forme illustrée se trouve être aux dimensions de l'ouverture 51. Les volets 56 se présentent chacun sous la forme d'un panneau plan 60 articulé autour d'un axe parallèle à la direction Y ; l'axe d'articulation est pour chaque panneau central longitudinalement. En position ouverte, les panneaux 60 se trouvent chacun dans un plan parallèle au plan YZ et tous parallèles les uns aux autres. En position fermée, les panneaux 60 sont dans un plan parallèle au plan XY, contiguës, aboutés les uns aux autres sans se superposer obturant chacune l'ouverture 50A, 50B, ... 50n correspondante et fermant l'ouverture rectangulaire 51 susmentionnée. Toute autre forme de réalisation est possible.

Dans la forme illustrée, la cuve 46 présente une dimension dans un plan parallèle au plan YZ diminuant longitudinalement en s'éloignant des ouvertures 48. Toute autre forme de cuve est possible du moment qu'elle présente des ouvertures 48 d'entrée et des ouvertures 50 de sortie permettant le changement de direction du flux pour larguer l'eau dans la direction du feu et en diminuer ainsi sa dispersion.

Selon une forme possible de réalisation, le dispositif de largage 14 est rétractable. En effet, pour permettre à la porte arrière 6 de se fermer, il est nécessaire que le dispositif 14 ne dépasse pas de l'extrémité 20 de la porte arrière. De nombreuses formes de réalisation sont possibles. Selon une première forme possible, le dispositif de largage est lié au tube ou auxdits tubes 12 par l'intermédiaire d'une charnière disposée au plus haut de chacun des tubes 12 et manchons 52, 54 permettant au dispositif de pivoter autour d'un axe transversal parallèle à la direction Y. Un joint périphérique est prévu entre le ou les tubes 12 et le ou les manchons 52, 54 pour assurer l'étanchéité lorsque le ou les manchons sont en position de largage dans le prolongement du ou des tubes 12. Selon une autre forme de réalisation possible, au moins une partie du ou des tubes sont réalisés de manière télescopique pour pouvoir réduire de longueur et permettre au dispositif 14 de largage de ne plus dépasser de l'extrémité 20.

Selon une autre forme de réalisation, le dispositif de largage 14 n'est pas rétractable. En effet, il est possible à certains aéronefs hôtes de voler avec la porte arrière 6 ouverte.

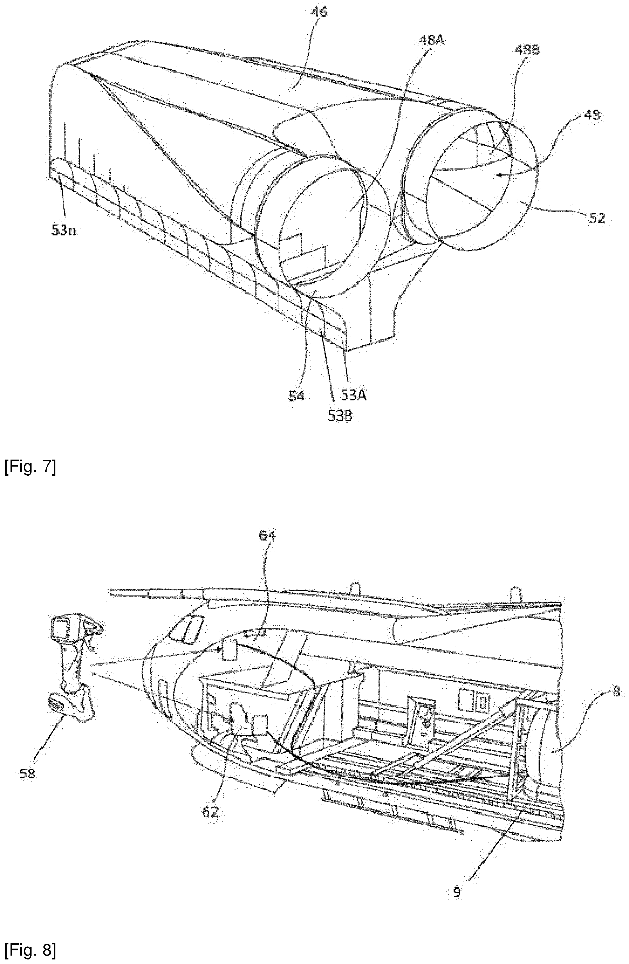

Comme indiqué plus haut, le système 8 est contrôlé à l'aide d'un dispositif de contrôle 58 susceptible d'être manipulé directement par un pilote et/ou un copilote et/ou un troisième homme dans le cockpit et/ou tout autre opérateur dont la fonction est de déclencher le largage d'eau et/ou de préparer la quantité adaptée. Le contrôle pourrait également être envisagé depuis le sol, le dispositif de contrôle étant alors connecté à l'aéronef par tout type de moyen de communication sans fil connu. Le dispositif 58, représenté par un rectangle dans l'aéronef dans l'exemple illustré sur la figure 7, est connecté au système 8 pour en assurer le contrôle. Suivant la forme de réalisation décrite ci-dessus, le dispositif 58 est connecté aux vannes 13 de fermeture des tubes 12 du côté du réservoir et/ou aux vannes 55 (volets 56 de fermeture). Le dispositif peut être utilisé par un troisième homme 62 (dont seul le siège sur lequel il est destiné à s'asseoir est représenté) ou depuis le cockpit 64 suivant le choix effectué par le pilote et/ou le troisième homme. La description qui suit présente une forme possible de réalisation du dispositif de contrôle mais toute autre forme est possible.

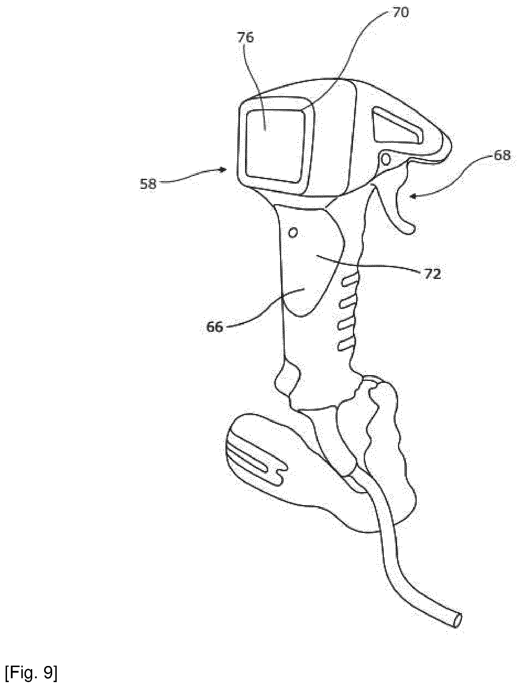

Comme montré sur la figure 8, le dispositif de contrôle 58 se présente sous la forme d'un pistolet 66 présentant une gâchette 68 de déclenchement, un panneau 70 de contrôle et un manche 72 de préhension. Le panneau 70 de contrôle présente des moyens de paramétrer plusieurs critères ayant une influence sur la quantité d'eau à larguer nécessaire. Ainsi il est possible de contrôler la quantité d'eau à l'aide des vannes 13 et/ou 55 présentés précédemment et ce selon différents critères. Le pistolet 66 comprend un processeur interne dans lequel est programmé un algorithme permettant de déterminer la quantité d'eau et plus précisément le flux nécessaire et la durée suivant les critères saisis. Dans la forme illustrée représentée sur la figure 9, le panneau 70 de contrôle comprend des boutons 74 à molettes pour régler de manière incrémentale chaque critère. Chaque bouton 74 permet de régler un critère. Dans l'exemple illustré, il est possible de saisir quatre critères : - l'altitude (A) de largage de l'aéronef ; - la vitesse (PS) de l'aéronef ; - la vitesse (WS) du vent ; - le sol concerné (VH) et par exemple la hauteur et/ou le type de la végétation et/ou le type de sol. Selon que soient concernés par exemple des résineux ou des feuillus la quantité d'eau nécessaire n'est pas forcément la même. Les sols de tourbe ou de bitume ne doivent pas être considérés de la même façon. D'autres critères sont susceptibles d'être ajoutés par l'intermédiaire d'un tel panneau de contrôle ou de manière différente. Par exemple le débit de largage peut varier suivant le sol au-dessus duquel l'aéronef vole. Dans ce cas, ce n'est plus à l'aide d'un bouton que le sol concerné est saisi mais d'une carte enregistrée du sol survolé. Ainsi par exemple le débit peut être important si la hauteur de végétation est importante puis diminuer voire s'interrompre en présence d'une clairière. Il est possible de programmer seulement certains critères ou l'ensemble de ceux-ci. Le panneau 70 de contrôle présente un écran 76 d'affichage pour afficher des informations. Ainsi par exemple, lorsque le bouton d'altitude est manipulé, l'altitude sélectionnée est affichée sur l'écran 76. D'autres types d'affichage peuvent être utilisés tels que par exemple de simples diodes électroluminescentes (LEDs) ou lignes de diodes électroluminescentes. Une fois l'ensemble des critères déterminés et saisis, l'algorithme calcule la quantité d'eau nécessaire et les vannes 13 et/ou 55 correspondantes à ouvrir pendant une durée donnée. Lorsque l'aéronef arrive sur les lieux, il ne reste plus qu'à la personne désignée pour actionner le largage d'eau qu'à actionner la gâchette 68 ; les vannes 13, 55 commandées par la gâchette à savoir les vannes 13 de fermeture des tubes 12 du côté du réservoir 10 et/ou les vannes 55 (volets 56) requises s'ouvrent et la quantité d'eau calculée sera projetée sur le feu à éteindre pendant la durée déterminée.

## Revendications

1. Système de stockage et de largage de fluide pour aéronef hôte comprenant un réservoir (10) de fluide et au moins un tube (12), **caractérisé en ce que** le réservoir (10) est connecté audit ou à l'ensemble desdits tubes (12) qui s'étend(ent) longitudinalement depuis le réservoir (10) de manière qu'une fois installé dans un aéronef hôte, le ou les tubes (12) conduisent le fluide jusqu'à l'extrémité (20) longitudinalement d'une porte arrière (6) de l'aéronef en position ouverte.

2. Système selon la revendication 1, **caractérisé en ce que** des tuyaux (22) s'étendent parallèlement aux tubes (12) et **en ce qu'**une des extrémités (24) de chaque tuyau (22) est connectée au réservoir (10) et l'autre extrémité (26) s'étend dans une direction différente de la direction longitudinale du ou des tubes (12).

3. Système selon la revendication 2, **caractérisé en ce que** l'autre extrémité (26) de chaque tuyau (22) s'étend dans une direction perpendiculaire à la direction longitudinale du ou des tubes (12).

4. Système selon l'une des revendications 1 à 3, **caractérisé en ce que** le réservoir est muni d'une ouverture (21) au niveau de la paroi (88) supérieure du réservoir et d'un flotteur (78) dans le réservoir destiné à fermer l'ouverture (21) lorsque le réservoir est rempli.

5. Système selon la revendication 4, caractérisé en ce la paroi (88) du réservoir présente une cavité (90) vers l'intérieur du réservoir allant en se rétrécissant jusqu'à l'ouverture (21).

6. Système selon la revendication 5, **caractérisé en ce que** l'extrémité libre de la cavité (90) est courbée et vient s'insérer dans un rétrécissement d'un flotteur (78), le mouvement dans une direction Z du flotteur étant alors bloqué par un épaulement formé par un élargissement supérieur et un épaulement formé par un élargissement inférieur.

7. Système selon l'une des revendications 4 à 6, **caractérisé en ce que** le flotteur (78) est lié à une paroi du réservoir par un bras (84) permettant de guider le mouvement du flotteur et lui permettre de s'éloigner et de se rapprocher de l'ouverture (21) et lorsqu'appliqué contre l'ouverture (21) de la fermer complètement.

8. Système selon la revendication 7, **caractérisé en ce qu'**un ressort de rappel (86) lie la paroi (88) du réservoir présentant l'ouverture (21) au bras (84).

9. Aéronef hôte comprenant une porte (6) arrière et une zone (4) intérieure dans laquelle est introduit un système selon l'une des revendications 1 à 8 dont les tubes (12) s'étendent jusqu'à l'extrémité (20) longitudinalement de ladite porte (6) arrière de l'aéronef en position ouverte.

10. Aéronef selon la revendication 9, **caractérisé en ce que** les tuyaux (22) s'étendent sur une distance permettant à leur extrémité (26) de venir à hauteur latéralement du bord latéral de la porte (6) arrière de l'aéronef ou en retrait vers l'intérieur de celle-ci.
